# EUROPEAN PATENT APPLICATION

(11) **EP 4 668 632 A1**
(43) Date of publication of application: **24.12.2025**
(21) Application number: 23921906.6
(22) Date of filing: 16.02.2023
(51) Int. Cl.: H04L 1/1812, H04W 4/06

(54) **MULTICAST COMMUNICATION METHOD AND APPARATUS THEREFOR**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2023/076610
(87) International publication number: WO 2024/168752

(57) **Abstract**

Embodiments of the present disclosure disclose a multicast communication method and an apparatus therefor, which can be applied to systems such as the Internet of vehicles, V2X and V2V. The method comprises: a first terminal determines a hybrid automatic repeat request (HARQ) feedback mode selected by the first terminal; according to the HARQ feedback mode selected by the first terminal, the first terminal determines whether to retransmit multicast data. By implementing the embodiments of the present disclosure, multicast communication in a Sidelink-U scene can be realized, the integrity of multicast data in the Sidelink-U scene is ensured, and the problem of packet loss of a terminal in a group is solved.

## Description

### TECHNICAL FIELD

The present disclosure relates to the field of communication technology, and specifically to a method groupcast communication and apparatus.

### BACKGROUND

In order to support direct communication between terminals, a direct communication (also called sidelink, SL) mode is introduced, and an interface between terminals is PC-5. According to a correspondence between a sending terminal and a receiving terminal, three transmission modes are supported on the sidelink, such as unicast, groupcast (also called multicast) and broadcast. For hybrid automatic repeat request (HARQ) feedback-enabled data packets, the receiving terminal performs hybrid automatic retransmission request acknowledgement (HARQ-ACK) feedback for a physical sidelink shared channel (PSSCH) on a physical sidelink feedback channel (PSFCH).

For the release18 (R18) Sidelink, it supports operating in unlicensed spectrum. Sidelink communication can use the unlicensed spectrum for communication. The unlicensed spectrum is open and can improve performance and rate through effective utilization. A communication device may communicate on an unlicensed frequency band resource obtained by competing for resources. For HARQ-enabled groupcast transmission, how to implement groupcast communication in a sidelink unlicensed spectrum (also called Sidelink-Unlicensed, SL-U, Sidelink-U) scenario has become an urgent problem to be solved.

### SUMMARY

Embodiments of the present disclosure provide a groupcast communication method and apparatus, which may be applied in Internet of vehicles communication, such as vehicle to everything (V2X) communication, long term evolution-vehicle (LTE-V) communication, vehicle to vehicle (V2V) communication, etc., or may be used in the fields of intelligent driving, intelligent connected vehicles, etc., and may realize groupcast communication in a sidelink unlicensed spectrum (Sidelink-U) scenario, to ensure integrity of groupcast data in the Sidelink-U scenario, and solve the problem of packet loss occurring in terminals within a group.

According to a first aspect of the embodiments of the present disclosure, there is provided a groupcast communication method, which is applied in a Sidelink-U scenario and performed by a first terminal, including:
determining a hybrid automatic repeat request (HARQ) feedback mode selected by the first terminal; and
determining whether to retransmit groupcast data according to the HARQ feedback mode selected by the first terminal.

In the technical solution, the first terminal determines whether to retransmit the groupcast data according to the selected HARQ feedback mode, thereby realizing groupcast communication in the Sidelink-U scenario, ensuring the integrity of the groupcast data in the Sidelink-U scenario, and solving the problem of packet loss occurring in terminals within the group.

In an implementation, determining whether to retransmit the groupcast data according to the HARQ feedback mode selected by the first terminal comprises: determining whether to retransmit the groupcast data according to HARQ feedback information of the groupcast data, in a case where the HARQ feedback mode selected by the first terminal is an acknowledgement/negative acknowledgement (ACK/NACK) feedback mode.

In a possible implementation, determining whether to retransmit the groupcast data according to the HARQ feedback information of the groupcast data comprises: determining that the HARQ feedback information of the groupcast data is NACK information; and determining to retransmit the groupcast data.

In a possible implementation, determining that the HARQ feedback information of the groupcast data is the NACK information comprises: determining that the HARQ feedback information of the groupcast data is the NACK information, in a case where no HARQ feedback information is detected on any of one or more physical sidelink feedback channel (PSFCH) resources associated with the groupcast data; or determining that the HARQ feedback information of the groupcast data is the NACK information, in a case where the NACK information is detected on any of one or more PSFCH resources associated with the groupcast data.

In a possible implementation, determining whether to retransmit the groupcast data according to the HARQ feedback information of the groupcast data comprises: determining that the groupcast data does not need to be retransmitted, in a case where the HARQ feedback information of the groupcast data is ACK information.

In a possible implementation, determining whether to retransmit the groupcast data according to the HARQ feedback mode selected by the first terminal comprises: retransmitting, by the first terminal, the groupcast data multiple times, in a case where the HARQ feedback mode selected by the first terminal is a NACK-only feedback mode.

In a possible implementation, the method further comprises: determining a retransmission number threshold for the groupcast data based on an implementation of the first terminal; and/or determining a retransmission number threshold for the groupcast data according to configuration information sent by a network device, wherein the configuration information comprises the retransmission number threshold.

In a possible implementation, the method further comprises: determining that a number of retransmissions of the groupcast data does not reach the retransmission number threshold; and feeding back NACK information to the network device on a physical uplink control channel (PUCCH) resource configured by the network device.

In a possible implementation, the method further comprises: sending the groupcast data on all reserved resources, in a case where the first terminal operates in a second resource allocation mode.

In a possible implementation, the method further comprises: selecting the HARQ feedback mode according to a first condition; wherein the first condition comprises at least one of: an upper layer providing a size and member identifiers of the groupcast group; or a size of the groupcast group being less than or equal to a number of PSFCH resources associated with a sidelink grant, wherein the sidelink grant is associated with the groupcast data.

In a possible implementation, selecting the HARQ feedback mode according to the first condition comprises: selecting, by the first terminal, an ACK/NACK feedback mode or a NACK-only feedback mode based on an implementation, in a case where the first condition is met; or selecting, by the first terminal, an ACK/NACK feedback mode only, in a case where the first condition is met; or selecting, by the first terminal, a NACK-only feedback mode, in a case where the first condition is not met.

According to a second aspect of the embodiments of the present disclosure, there is provided a groupcast communication method, which is applied in a Sidelink-U scenario and performed by a network device, including:
configuring a physical uplink control channel (PUCCH) resource for a first terminal, in which the PUCCH resource is used to transmit hybrid automatic repeat request (HARQ) feedback information fed back by the first terminal to the network device, and the first terminal is a terminal for sending groupcast data; and
receiving the HARQ feedback information fed back by the first terminal on the PUCCH resource.

In the technical solution, the network device receives the HARQ feedback information fed back by the first terminal on the PUCCH resource, so that the network device determines whether there is need to schedule retransmission of groupcast data based on the HARQ feedback information, thereby ensuring the integrity of the groupcast data in the Sidelink-U scenario, realizing groupcast communication in the Sidelink-U scenario, and solving the problem of packet loss occurring in terminals within the group.

In an implementation, the method further comprises: sending configuration information to the first terminal, wherein the configuration information comprises a retransmission number threshold.

In an implementation, receiving the HARQ feedback information fed back by the first terminal on the PUCCH resource comprises: receiving acknowledgement (ACK) information fed back by the first terminal on the PUCCH resource, wherein the ACK information is an HARQ feedback sent to the network device by the first terminal in a case of determining that the HARQ feedback information of the groupcast data is the ACK information.

In an implementation, receiving the HARQ feedback information fed back by the first terminal on the PUCCH resource comprises: receiving negative acknowledgement (NACK) information fed back by the first terminal on the PUCCH resource, wherein the NACK information is an HARQ feedback sent to the network device by the first terminal in a case of selecting a NACK-only feedback mode, retransmitting the groupcast data multiple times and determining that a number of retransmissions of the groupcast data does not reach the retransmission number threshold.

In a possible implementation, the method further comprises: scheduling, by the network device, retransmission of the groupcast data, in a case of receiving the NACK information fed back by the first terminal on the PUCCH resource.

According to a third aspect of the embodiments of the present disclosure, there is provided a communication apparatus. The communication apparatus has some or all of the functions of the terminal in the method embodiment in the first aspect above, for example, the communication apparatus may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

In an implementation, the communication apparatus may include a transceiver module and a processing module, in which the processing module is configured to support the communication apparatus to perform the corresponding functions in the above method, the transceiver module is configured to support communication between the communication apparatus and other devices. The communication apparatus may also include a storage module, in which the storage module is configured to couple with the transceiver module and the processing module, and save a computer program and data necessary for the communication apparatus.

In an implementation, the processing module is configured to: determine a hybrid automatic repeat request (HARQ) feedback mode selected by the first terminal; and determine whether to retransmit groupcast data according to the HARQ feedback mode selected by the first terminal.

In an implementation, the processing module is further configured to: determine whether to retransmit the groupcast data according to HARQ feedback information of the groupcast data, in a case where the HARQ feedback mode selected by the first terminal is an acknowledgement/negative acknowledgement (ACK/NACK) feedback mode.

In a possible implementation, the processing module is further configured to: determine that the HARQ feedback information of the groupcast data is NACK information; and determine to retransmit the groupcast data.

In a possible implementation, the processing module is further configured to: determine that the HARQ feedback information of the groupcast data is the NACK information, in a case where no HARQ feedback information is detected on any of one or more physical sidelink feedback channel (PSFCH) resources associated with the groupcast data; or determine that the HARQ feedback information of the groupcast data is the NACK information, in a case where the NACK information is detected on any of one or more PSFCH resources associated with the groupcast data.

In a possible implementation, the processing module is further configured to: determine that the groupcast data does not need to be retransmitted, in a case where the HARQ feedback information of the groupcast data is ACK information.

In a possible implementation, the processing module is further configured to: retransmit, by the first terminal, the groupcast data multiple times, in a case where the HARQ feedback mode selected by the first terminal is a NACK-only feedback mode.

In a possible implementation, the processing module is further configured to: determine a retransmission number threshold for the groupcast data based on an implementation of the first terminal; and/or determine a retransmission number threshold for the groupcast data according to configuration information sent by a network device, wherein the configuration information comprises the retransmission number threshold.

In a possible implementation, the processing module is further configured to: determine that a number of retransmissions of the groupcast data does not reach the retransmission number threshold; and the transceiver module is further configured to: feed back NACK information to the network device on a physical uplink control channel (PUCCH) resource configured by the network device.

In a possible implementation, the transceiver module is further configured to: send the groupcast data on all reserved resources, in a case where the first terminal operates in a second resource allocation mode.

In a possible implementation, the processing module is further configured to: select the HARQ feedback mode according to a first condition; wherein the first condition comprises at least one of: an upper layer providing a size and member identifiers of the groupcast group; or a size of the groupcast group being less than or equal to a number of PSFCH resources associated with a sidelink grant, wherein the sidelink grant is associated with the groupcast data.

In a possible implementation, the processing module is further configured to: select, by the first terminal, an ACK/NACK feedback mode or a NACK-only feedback mode based on an implementation, in a case where the first condition is met; or select, by the first terminal, an ACK/NACK feedback mode only, in a case where the first condition is met; or select, by the first terminal, a NACK-only feedback mode, in a case where the first condition is not met.

As an example, the processing module may be a processor, the transceiver module may be a transceiver or a communication interface, and the storage module be a memory.

According to a fourth aspect of the embodiments of the present disclosure, there is provided a communication apparatus. The communication apparatus has some or all of the functions of the network device in the method embodiments in the second aspect above, for example, the communication apparatus may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

In an implementation, the communication apparatus may include a transceiver module and a processing module, in which the processing module is configured to support the communication apparatus to perform the corresponding functions in the above method, the transceiver module is configured to support communication between the communication apparatus and other devices. The communication apparatus may also include a storage module, in which the storage module is configured to couple with the transceiver module and the processing module, and save a computer program and data necessary for the communication apparatus.

In an implementation, the processing module is configured to: configure a physical uplink control channel (PUCCH) resource for a first terminal, in which the PUCCH resource is used to transmit hybrid automatic repeat request (HARQ) feedback information fed back by the first terminal to the network device, and the first terminal is a terminal for sending groupcast data; and the transceiver module is configured to: receive the HARQ feedback information fed back by the first terminal on the PUCCH resource.

In an implementation, the transceiver module is further configured to: send configuration information to the first terminal, wherein the configuration information comprises a retransmission number threshold.

In an implementation, the transceiver module is further configured to: receive acknowledgement (ACK) information fed back by the first terminal on the PUCCH resource, wherein the ACK information is an HARQ feedback sent to the network device by the first terminal in a case of determining that the HARQ feedback information of the groupcast data is the ACK information.

In an implementation, the transceiver module is further configured to: receive negative acknowledgement (NACK) information fed back by the first terminal on the PUCCH resource, wherein the NACK information is an HARQ feedback sent to the network device by the first terminal in a case of selecting a NACK-only feedback mode, retransmitting the groupcast data multiple times and determining that a number of retransmissions of the groupcast data does not reach the retransmission number threshold.

In a possible implementation, the processing module is further configured to: schedule retransmission of the groupcast data, in a case of receiving the NACK information fed back by the first terminal on the PUCCH resource.

As an example, the processing module may be a processor, the transceiver module may be a transceiver or a communication interface, and the storage module be a memory.

According to a fifth aspect of the embodiments of the present disclosure, there is provided a communication apparatus including a processor. When a computer program stored in a memory is called by the processor, the method described in the first aspect is implemented.

According to a sixth aspect of the embodiments of the present disclosure, there is provided a communication apparatus including a processor. When a computer program stored in a memory is called by the processor, the method described in the second aspect is implemented.

According to a seventh aspect of the embodiments of the present disclosure, there is provided a communication apparatus including a processor and a memory storing a computer program. When the computer program stored in a memory is executed by the processor, the communication apparatus is caused to implement the method described in the first aspect.

According to an eighth aspect of the embodiments of the present disclosure, there is provided a communication apparatus including a processor and a memory storing a computer program. When the computer program stored in a memory is executed by the processor, the communication apparatus is caused to implement the method described in the second aspect.

According to a ninth aspect of the embodiments of the present disclosure, there is provided a communication apparatus, including a processor and an interface circuit for receiving code instructions and sending the code instructions to the processor, in which the processor is configured to execute the code instructions to cause the apparatus to perform the method described in the first aspect.

According to a tenth aspect of the embodiments of the present disclosure, there is provided a communication apparatus, including a processor and an interface circuit for receiving code instructions and sending the code instructions to the processor, in which the processor is configured to execute the code instructions to cause the apparatus to perform the method described in the second aspect.

According to an eleventh aspect of the embodiments of the present disclosure, a communication system is provided, in which the system includes the communication apparatus described in the third aspect and the communication apparatus described in the fourth aspect, or the system includes the communication apparatus described in the fifth aspect and the communication apparatus described in the sixth aspect, or the system includes the communication apparatus described in the seventh aspect and the communication apparatus described in the eighth aspect, or the system includes the communication apparatus described in the ninth aspect and the communication apparatus described in the tenth aspect.

According to a twelfth aspect of the embodiments of the present disclosure, a computer-readable storage medium for storing instructions used by the terminal is provided. When the instructions are executed, the terminal is caused to implement the method described in the first aspect.

According to a thirteenth aspect of the embodiments of the present disclosure, a computer-readable storage medium for storing instructions used by the network device is provided. When the instructions are executed, the network device is caused to implement the method described in the second aspect.

According to a fourteenth aspect of the embodiments of the present disclosure, a computer program product including a computer program is provided. When the computer program is running on a computer, the computer is caused to perform the method described in the first aspect.

According to a fifteenth aspect of the embodiments of the present disclosure, a computer program product including a computer program is provided. When the computer program is running on a computer, the computer is caused to perform the method described in the second aspect.

According to a sixteenth aspect of the embodiments of the present disclosure, a chip system is provided, including at least one processor and an interface configured to support the terminal to perform the functions in the first aspect, for example, at least one of determining or processing data and information in the above method. In one possible design, the chip system also includes a memory for saving a computer program and data necessary for the source secondary node. The chip system may include a chip, or a chip and other discrete devices.

According to a seventeenth aspect of the embodiments of the present disclosure, a chip system is provided, including at least one processor and an interface configured to support the network device to perform the functions in the second aspect, for example, at least one of determining or processing data and information in the above method. In one possible design, the chip system also includes a memory for saving a computer program and data necessary for the source secondary node. The chip system may include a chip, or a chip and other discrete devices.

According to an eighteenth aspect of the embodiments of the present disclosure, a computer program is provided. When the computer program is running on a computer, the computer is caused to implement the method described in the first aspect.

According to a nineteenth aspect of the embodiments of the present disclosure, a computer program is provided. When the computer program is running on a computer, the computer is caused to implement the method described in the second aspect.

### BRIEF DESCRIPTION OF THE DRAWINGS

In order to clearly illustrate technical solutions of the embodiments and the background of the present disclosure, a brief description of drawings used in embodiments and the background is given below.
FIG. 1 is a schematic diagram of a communication system according to an embodiment of the present disclosure;
FIG. 2 is a flowchart of a groupcast communication method according to an embodiment of the present disclosure;
FIG. 3 is a flowchart of a groupcast communication method according to an embodiment of the present disclosure;
FIG. 4 is a flowchart of a groupcast communication method according to an embodiment of the present disclosure;
FIG. 5 is a block diagram of a communication apparatus according to an embodiment of the present disclosure;
FIG. 6 is a block diagram of a communication apparatus according to an embodiment of the present disclosure;
FIG. 7 is a block diagram of a chip according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The embodiments described below with reference to the accompanying drawings are exemplary and are intended to be used to explain the present disclosure, and should not be construed as limitations on the present disclosure. In the description of the present disclosure, unless otherwise specified, "/" means or, for example, A/B may mean A or B; "and/or" herein is merely a description of the association relationship of associated objects, indicating that three relationships may exist, for example, A and/or B may mean: A exists alone, A and B exist at the same time, and B exists alone.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning.

It should be understood that although the terms first, second, third, etc. may be used to describe various information in the embodiments of the present disclosure, such information should not be limited to these terms. These terms are used only to distinguish information in the same type from one another. For example, without leaving the scope of the embodiments of the present disclosure, the first information may also be referred to as the second information, and likewise the second information may be referred to as the first information. Depending on the context, the words "if" and "in a case" used here may be interpreted as "when" or "in response to determining".

Reference will now be made in detail to exemplary embodiments, examples of which are illustrated in the accompanying drawings. The following description refers to the accompanying drawings in which the same numbers in different drawings represent the same or similar elements unless otherwise represented. The embodiments described below with reference to the accompanying drawings are exemplary and are intended to be used to explain the present disclosure, and should not be construed as limitations on the present disclosure.

For ease of understanding, the terms involved in the present disclosure are first introduced.

### 1. Listen-Before-Talk (LBT)

LBT is a widely used technology in radio communication. Before starting transmission, a radio transmitter will first listen to its radio environment to detect whether a channel is idle. If the channel is busy, the radio transmitter will wait until the channel is idle before transmitting, thereby avoiding channel access conflicts and achieving channel spectrum sharing.

### 2. Sidelink (SL)

SL refers to a link for direct communication between terminals.

### 3. Vehicle-to-everything (V2X) communication

V2X communication refers to communication between a vehicle and anything in the outside world. V2X communication may include, but is not limited to, vehicle to vehicle (V2V) communication, vehicle to pedestrian (V2P) communication, vehicle to infrastructure (V2I) communication, and vehicle to network (V2N) communication.

It should be noted that in order to support direct communication between terminals, a direct communication (also called sidelink, SL) mode is introduced, and an interface between terminals is PC-5. According to a correspondence between a sending terminal and a receiving terminal, three transmission modes are supported on the sidelink, such as unicast, groupcast and broadcast. The sending terminal sends sidelink control Information (SCI) on a physical sidelink control channel (PSCCH) channel and sends second stage SCI on a physical sidelink shared channel (PSSCH) channel, which carries a resource location for transmission of data and source and target identifiers, etc. For hybrid automatic repeat request (HARQ) feedback-enabled data packets, the receiving terminal performs hybrid automatic retransmission request acknowledgement (HARQ-ACK) feedback for a physical sidelink shared channel (PSSCH) on a physical sidelink feedback channel (PSFCH).

There are two ways to allocate transmission resources for sidelink communication, one is the way that the network dynamic schedules (resource allocation mode 1), and the other is the way that the terminal autonomously selects from a resource pool broadcast by the network (resource allocation mode 2). Dynamic scheduling means that the network dynamically allocates transmission resources on the sidelink to the terminal based on cached data reported by the terminal, while autonomous selecting means that the terminal independently and randomly selects transmission resources from the resource pool configured or pre-configured by the network. The network device may configure multiple resource pools for the terminal on a band width part (BWP). The specific allocation mode used is configured by the network device through radio resource control (RRC) signaling. The terminal running in the resource allocation mode 1 (model) may send sidelink data through a dynamic grant (also called dynamic sidelink grant) scheduled by the network, or through a configured grant (also called configured sidelink grant) configured by the network. The dynamic scheduling grant may indicate three transmission resources through a DCI (Downlink Control Information), in which the transmission resource includes PSCCH and PSSCH resources. If a new data indicator (NDI) in the DCI is flipped compared to the last scheduling, the three transmission resources include new transmission resources and retransmission resources; if the NDI in the DCI is not flipped compared to the last scheduling, the three transmission resources are retransmission resources. The configured grant determines a location of a transmission resource through configuration on the network side. One configured grant cycle contains three transmission resources, which include new transmission resources and retransmission resources.

NR (New Radio) sidelink supports HARQ feedback, so the network side is supported to configure HARQ attributes for a sidelink logical channel (SL-LCH), including HARQ-enabled and HARQ-disabled. For a HARQ-enabled LCH, it may only be multiplexed with other HARQ-enabled LCHs belonging to the same target address during a logical channel prioritization (LCP) procedure. For a HARQ-disabled LCH, it may only be multiplexed with other HARQ-disabled LCHs belonging to the same target address during the LCP procedure. For HARQ-enabled data packets, HARQ feedback needs to be supported. The HARQ feedback of NR sidelink is carried by a PSFCH. A HARQ feedback mode for groupcast transmission may include a positive-negative acknowledgement (ACK/NACK) feedback mode and a negative-only acknowledgement (NACK-only) feedback mode. The ACK/NACK feedback mode means that the HARQ feedback may carry both ACK and NACK; the NACK-only feedback mode means that the HARQ feedback may only carry NACK. Groupcast service HARQ is enabled. If an upper layer can provide a groupcast group size and member identifiers (member IDs) and the groupcast group size is less than or equal to (or not greater than) the number of PSFCH resources associated with the sidelink grant configuration, the terminal may select the ACK/NACK or NACK-only feedback mode according to implementations. Otherwise, the terminal may only select the NACK-only feedback mode. If it is the ACK/NACK feedback mode, each receiving terminal determines its own PSFCH feedback resource and performs the HARQ feedback (ACK or NACK) on the resource. If the sending terminal detects any NACK, the data packet needs to be retransmitted. If it is the NACK-only feedback mode, the receiving terminal may only feedback NACK, and ACK does not need to be fed back. If the sending terminal detects the HARQ feedback, the data packet needs to be retransmitted.

For a terminal operating in the resource allocation mode 1 (model), if a PUCCH is configured and a timing advance timer (TAT) associated with a timing advance group (TAG) of a serving cell has not timed out, the terminal needs to send the HARQ feedback on the PUCCH, and the network device determines whether retransmission needs to be scheduled based on the HARQ feedback received on the PUCCH.

NR-U is a project launched by 3GPP in R16, which provides a necessary technology for operators to fully integrate unlicensed spectrum into 5G networks. NR-U supports uplink and downlink operations in unlicensed frequency bands. In NR-U, both channel access for downlink and channel access for uplink rely on the LBT feature. A wireless device or a base station must first "sense" a communication channel and determine that no other device is communicating before any transmission.

R18 sidelink has enhanced support for unlicensed spectrum. Sidelink communication may use the unlicensed spectrum for communication. The unlicensed spectrum is open and can improve performance and rate through effective utilization. A communication device may communicate on an unlicensed frequency band resource obtained by competing for resources. For HARQ-enabled groupcast transmission, if the HARQ feedback mode is NACK-only, the NACK feedback fails to be sent due to an LBT failure, and the sending terminal cannot detect the HARQ feedback, then the sending terminal will consider the HARQ feedback as ACK and continue to send new data packets, which will cause packet loss occurring in the terminals within the group. Therefore, for R18 Sidelink, in the case of HARQ-enabled groupcast transmission, how to implement groupcast communication in the Sidelink-U (Sidelink-Unlicensed, sidelink unlicensed spectrum) scenario has become an urgent problem to be solved.

Based on the above description, the present disclosure provides a groupcast communication method and apparatus, which may be applied in Internet of vehicles communication, such as vehicle to everything (V2X) communication, long term evolution-vehicle (LTE-V) communication, vehicle to vehicle (V2V) communication, etc., or may be used in the fields of intelligent driving, intelligent connected vehicles, etc. A first terminal sends sidelink groupcast data to a second terminal, and in a case where HARQ of the groupcast data is enabled, it is determined whether to retransmit the groupcast data according to a selected HARQ feedback mode, thereby realizing groupcast communication in a sidelink unlicensed spectrum (Sidelink-U) scenario, to ensure integrity of groupcast data in the Sidelink-U scenario, and solve the problem of packet loss occurring in terminals within a group.

In order to better understand a groupcast communication method disclosed in the embodiments of the present disclosure, a communication system to which the embodiments of the present disclosure are applicable is first described below.

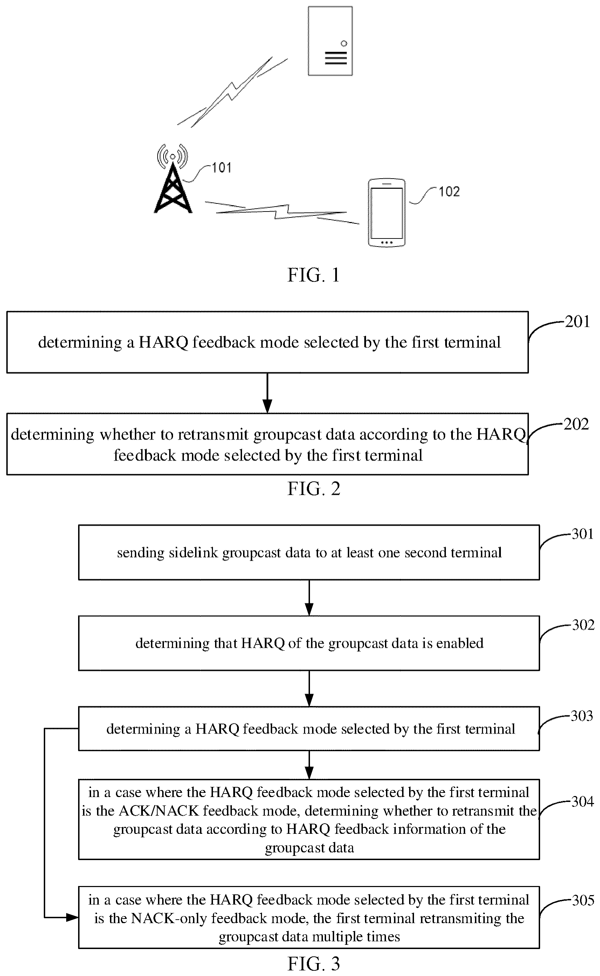

Please refer to FIG. 1, which is a schematic diagram of a communication system according to an embodiment of the present disclosure. The communication system may include, but is not limited to, one network device and one terminal. The number and form of devices shown in FIG. 1 are only shown as an example, and do not constitute a limitation on the embodiments of the present disclosure. The communication system may include two or more network devices and two or more terminals in a practical application. The communication system in FIG. 1 including one network device 101 and one terminal 12 is shown as an example.

It should be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future. It should be noted that the sidelink in the embodiments of the present application may also be called a side link or a direct link.

The network device 101 in the embodiments of the present disclosure is an entity on the network side for sending or receiving signals. For example, the network device 101 may be an evolved NodeB (eNB), a transmission reception point (TRP), a next generation NodeB (gNB) in an NR system, a base station in other mobile communication system in the future, or an access point in a wireless fidelity (WiFi) system. The embodiments of the present disclosure do not limit the specific technology and the specific device form used by the network device. The network device in the embodiments of the present disclosure may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU.

The terminal 102 in the embodiments of the present disclosure is an entity on the user side for receiving or sending signals, such as a mobile phone. Terminal may also be called, a terminal device, a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and the specific device form used by the terminal.

It can be understood that the communication system described in the embodiments of the present disclosure is described for the purpose of more clearly illustrating the technical solution of the embodiments of the present disclosure, and does not constitute a limitation on the technical solution provided by the embodiments of the present disclosure. A person skilled in the art may know that with the evolution of the system architecture and the emergence of new business scenarios, the technical solution provided by the embodiments of the present disclosure is also applicable to similar technical problems.

The groupcast communication method and apparatus provided in the present disclosure will be described below in detail with reference to the accompanying drawings.

With reference to FIG. 2, FIG. 2 is a flowchart of a groupcast communication method according to an embodiment of the present disclosure. It should be noted that the method may be applied in a Sidelink-U scenario, and performed by a first terminal. As shown in FIG. 2, the method may include but is not limited to the following steps.

At step 201, a HARQ feedback mode selected by the first terminal is determined.

Optionally, in an embodiment of the present disclosure, the first terminal may send sidelink groupcast data to at least one second terminal, and determine the HARQ feedback mode selected by the first terminal in a case where HARQ of the groupcast data is enabled.

In an embodiment of the present disclosure, the first terminal and the at least one second terminal are terminals in the Sidelink-U scenario, and the first terminal and the at least one second terminal are located in the same groupcast group.

In an implementation, the first terminal may be a sending terminal in groupcast communication, the at least one second terminal may be a receiving terminal in the groupcast communication, and the first terminal and the at least one second terminal are located in the same groupcast group. In an embodiment of the present disclosure, the first terminal, as the sending terminal, may send sidelink groupcast data to a second terminal in the same groupcast group, in which the number of second terminals in the same groupcast group as the first terminal may be one or more.

Optionally, in an implementation, the first terminal may send first-stage SCI on a PSCCH and second-stage SCI on a PSSCH, which carries the resource location for transmitting the sidelink groupcast data as well as source and target identifiers, etc. As an example, the target identifier may be address information associated with the groupcast data, thereby enabling the first terminal to send the sidelink groupcast data to the second terminal in the groupcast group.

In an embodiment of the present disclosure, the first terminal determines that the HARQ of the groupcast data is enabled in one implementation as follows: the first terminal may determine whether the HARQ of the sidelink groupcast data is enabled or disabled (also called HARQ disabling) based on the HARQ attribute configured by the network device for the SL-LCH. As an example, if the HARQ attribute of the SL-LCH contained in the groupcast data is configured as HARQ enabled by the network device, the first terminal may determine that the HARQ of the sidelink groupcast data is enabled; if the HARQ attribute of the SL-LCH contained in the groupcast data is configured as HARQ disabled (also called HARQ disabling) by the network device, the first terminal may determine that the HARQ of the sidelink groupcast data is disabled (also called HARQ disabling).

In an embodiment of the present disclosure, when the first terminal determines that the HARQ of the sidelink groupcast data is disabled (also called HARQ disabling), the first terminal sets a HARQ feedback indication in the SCI associated with the groupcast service to HARQ disabled (also called HARQ disabling), and the second terminal, as the receiving terminal, may not perform the HARQ feedback for the groupcast data sent by the first terminal.

At step 202, it is determined whether to retransmit groupcast data according to the HARQ feedback mode selected by the first terminal.

In an embodiment of the present disclosure, when the first terminal determines that the HARQ of the sidelink groupcast data is enabled, the first terminal may determine the HARQ feedback mode selected by the first terminal, and determine whether to retransmit the groupcast data according to the HARQ feedback mode selected by the first terminal.

That is, for HARQ-enabled sidelink groupcast data (i.e., the HARQ of the sidelink groupcast data is enabled), the first terminal, as the sending terminal, may determine whether to retransmit the groupcast data according to the HARQ feedback mode selected by the first terminal.

In an embodiment of the present disclosure, the first terminal may select the HARQ feedback mode according to a first condition. That is, the first terminal may determine which HARQ feedback mode is selected according to the condition, that is, the first terminal may determine the HARQ feedback mode selected by the first terminal according to whether the first condition is met.

Optionally, in an embodiment of the present disclosure, when the first condition is met, the first terminal may select an ACK/NACK feedback mode or a NACK-only feedback mode based on implementations. The first condition may include at least one of the following: an upper layer providing a size and member identifiers of a groupcast group, in which the size is less than or equal to the number of PSFCH resources associated with a sidelink grant, and the sidelink grant is a sidelink grant associated with the groupcast data.

As an example of a possible implementation, if the upper layer provides the size and the member identifiers of the groupcast group, the first terminal may consider that the first condition is met, and the first terminal may select the ACK/NACK feedback mode or the NACK-only feedback mode based on the implementation. As an example of another possible implementation, if the size of the groupcast group is less than or equal to the number of PSFCH resources associated with the sidelink grant, the first terminal may consider that the first condition is met, and the first terminal may select the ACK/NACK feedback mode or the NACK-only feedback mode based on the implementation. As an example of yet another possible implementation, if the upper layer provides the size and the member identifiers of the groupcast group, and the size of the groupcast group is less than or equal to the number of PSFCH resources associated with the sidelink grant, the first terminal may consider that the first condition is met, and the first terminal may select the ACK/NACK feedback mode or the NACK-only feedback mode based on the implementation.

Optionally, in an embodiment of the present disclosure, when the first condition is met, the first terminal may only select the ACK/NACK feedback mode. That is, for HARQ-enabled sidelink groupcast data, the first terminal, as the sending terminal, may only select the ACK/NACK feedback mode.

In an implementation, in a case where the HARQ of the sidelink groupcast data is enabled, even if the first condition is met, the first terminal, as the sending terminal, may only select the ACK/NACK feedback mode. The first condition may include at least one of the following: the upper layer providing the size and the member identifiers of the groupcast group, in which the size of the groupcast group is less than or equal to the number of PSFCH resources associated with the sidelink grant.

As an example, in a case where the HARQ of the sidelink groupcast data is enabled, even if the upper layer can provide the size and the member identifiers of the groupcast group, in which the size of the groupcast group is less than or equal to (i.e., not greater than) the number of PSFCH resources associated with the sidelink grant, the first terminal, as the sending terminal, may only select the ACK/NACK feedback mode.

Optionally, in an embodiment of the present disclosure, when the first condition is not met, the first terminal selects the NACK-only feedback mode. That is, for HARQ-enabled sidelink groupcast data, in a case where the first terminal, as the sending terminal, determines that the first condition is not met, the first terminal selects the NACK-only feedback mode. The first condition may include at least one of the following: the upper layer providing the size and the member identifiers of the groupcast group, in which the size of the groupcast group is less than or equal to the number of PSFCH resources associated with the sidelink grant.

As an example, in a case where the HARQ of the sidelink groupcast data is enabled, if the first condition is not met, for example the upper layer does not provide the size and the member identifiers of the groupcast group, and/or the size of the groupcast group is greater than the number of PSFCH resources associated with the sidelink grant, the first terminal, as the sending terminal, may only select the NACK-only feedback mode.

For example, for HARQ-enabled groupcast data, if the HARQ feedback mode is NACK-only, and the NACK feedback fails to be sent due to an LBT failure, the sending terminal cannot detect the HARQ feedback, then the sending terminal will consider the feedback as ACK and continue to send new data packets, thereby causing packet loss occurring in the terminals within the group. In order to solve this problem, in the present disclosure, for HARQ-enabled groupcast transmission, the first terminal, as the sending terminal, may only select the ACK-NACK feedback mode. In this way, if the NACK feedback fails to be sent due to the LBT failure, and the first terminal, as the sending terminal, cannot detect the HARQ feedback, the first terminal will consider the HARQ feedback of the groupcast data as NACK. In this way, the first terminal may determine that the groupcast data needs to be retransmitted based on the NACK, thereby avoiding the problem of packet loss occurring in the terminals within the group.

In an embodiment of the present disclosure, the first terminal, as the sending terminal, may determine whether to retransmit the sidelink groupcast data according to the HARQ feedback mode selected by itself.

In an implementation, in a case where the HARQ feedback mode selected by the first terminal is the ACK/NACK feedback mode, the first terminal may determine whether the groupcast data needs to be retransmitted based on HARQ feedback information of the sidelink groupcast data, thereby ensuring the integrity of the groupcast data in the Sidelink-U scenario and solving the problem of packet loss occurring in terminals within the group.

**In** another implementation, in a case where the HARQ feedback mode selected by the first terminal is the NACK-only feedback mode, the first terminal retransmits the groupcast data multiple times. That is, if the HARQ feedback mode selected by the first terminal is the NACK-only feedback mode, the first terminal needs to retransmit the groupcast data multiple times. In this way, if the first terminal selects the NACK-only feedback mode, even if the NACK feedback fails to be sent due to an LBT failure, and the first terminal, as the sending terminal, cannot detect the HARQ feedback, the first terminal will not consider the feedback as ACK to continue to send new data packets, but retransmits the groupcast data, thereby solving the problem of packet loss occurring in the terminals in the group due to the first terminal failing to detect the HARQ feedback and mistakenly considering the feedback as ACK to continue to send new data packets.

In an embodiment of the present disclosure, the sidelink groupcast data may be sent to the second terminal by the first terminal, and when the HARQ of the groupcast data is enabled, it is determined whether to retransmit the groupcast data according to the selected HARQ feedback mode, thereby realizing groupcast communication in a Sidelink-U scenario, ensuring the integrity of the groupcast data in the Sidelink-U scenario, and solving the problem of packet loss occurring in terminals within the group.

With reference to FIG. 3, FIG. 3 is a flowchart of a groupcast communication method according to an embodiment of the present disclosure. It should be noted that the method may be applied in a Sidelink-U scenario, and performed by a first terminal. As shown in FIG. 3, the method may include but is not limited to the following steps.

At step 301, sidelink groupcast data is sent to at least one second terminal.

In the embodiments of the present disclosure, step 301 may be implemented in any of the embodiments of the present disclosure, which is not limited here and will not be described in detail.

At step 302, it is determined that HARQ of the groupcast data is enabled.

In the embodiments of the present disclosure, step 302 may be implemented in any of the embodiments of the present disclosure, which is not limited here and will not be described in detail.

At step 303, a HARQ feedback mode selected by the first terminal is determined.

In an embodiment of the present disclosure, the first terminal may determine the HARQ feedback mode selected by the first terminal according to whether a first condition is met. The first condition may include at least one of the following: an upper layer providing a size and member identifiers of a groupcast group, in which the size is less than or equal to the number of PSFCH resources associated with a sidelink grant, and the sidelink grant is a sidelink grant associated with the groupcast data.

In this embodiment, the first condition may include: the upper layer providing the size and the member identifiers of the groupcast group; or the first condition may include: the size of the groupcast group being less than or equal to the number of PSFCH resources associated with the sidelink grant. Alternatively, the first condition may include: the upper layer providing the size and the member identifiers of the groupcast group, and the size of the groupcast group being less than or equal to the number of PSFCH resources associated with the sidelink grant.

In an implementation, when the first condition is met, the first terminal may select an ACK/NACK feedback mode or a NACK-only feedback mode based on an implementation. For example, if the upper layer provides the size and the member identifiers of the groupcast group, and the size of the groupcast group is less than or equal to the number of PSFCH resources associated with the sidelink grant, then the first terminal may consider that the first condition is met, and the first terminal may select the ACK/NACK feedback mode or the NACK-only feedback mode based on the implementation.

In another implementation, when the first condition is met, the first terminal may only select the ACK/NACK feedback mode. That is, for HARQ-enabled sidelink groupcast data, if the first condition is met, the first terminal, as the sending terminal, may only select the ACK/NACK feedback mode.

In another implementation, when the first condition is not met, the first terminal selects the NACK-only feedback mode. That is, for HARQ-enabled sidelink groupcast data, in a case where the first terminal, as the sending terminal, determines that the first condition is not met, the first terminal selects the NACK-only feedback mode.

At step 304, in a case where the HARQ feedback mode selected by the first terminal is the ACK/NACK feedback mode, it is determined whether to retransmit the groupcast data according to HARQ feedback information of the groupcast data.

That is, if the HARQ feedback mode selected by the first terminal is the ACK/NACK feedback mode, the first terminal, as the sending terminal, may determine whether to retransmit the groupcast data based on the HARQ feedback information of the groupcast data.

The ACK/NACK feedback mode means that HARQ may carry both ACK and NACK. The first terminal may determine whether to retransmit the groupcast data based on the HARQ feedback information sent by the second terminal as the receiving terminal. The HARQ feedback information may be ACK information or NACK information.

Optionally, in an embodiment of the present disclosure, if the first terminal determines that the HARQ feedback information of the groupcast data is NACK information, the first terminal may determine to retransmit the groupcast data. In other words, when the first terminal determines that the HARQ feedback information of the groupcast data is NACK information, the groupcast data needs to be retransmitted.

In an implementation, if the first terminal does not detect HARQ feedback information on one or more PSFCH resources associated with the groupcast data, the first terminal may determine that the HARQ feedback information of the groupcast data is NACK information.

As an example of a possible implementation, if the first terminal does not detect HARQ feedback information on one or more PSFCH resources associated with at least one second terminal in a groupcast group, the first terminal considers that the HARQ feedback information of the groupcast data is NACK information, and the groupcast data needs to be retransmitted. Alternatively, as an example of another possible implementation, if the first terminal detects NACK information on one or more PSFCH resources associated with at least one second terminal in the groupcast group, the first terminal considers that the HARQ feedback information of the groupcast data is NACK information, and the groupcast data needs to be retransmitted.

Optionally, in an embodiment of the present disclosure, if the first terminal determines that the HARQ feedback information of the groupcast data is ACK information, the first terminal may determine that there is no need to retransmit the groupcast data. In other words, when the first terminal determines that the HARQ feedback information of the groupcast data is ACK information, the groupcast data does not need to be retransmitted.

As an example of a possible implementation, if the first terminal detects ACK on one or more PSFCH resources associated with each second terminal in the groupcast group, the first terminal considers that the HARQ feedback information of the groupcast data is ACK information and there is no need to retransmit the groupcast data.

Optionally, in some embodiments of the present disclosure, the groupcast communication method may further include step 305. In step 305, in a case where the HARQ feedback mode selected by the first terminal is the NACK-only feedback mode, the first terminal retransmits the groupcast data multiple times.

That is, if the HARQ feedback mode selected by the first terminal is the NACK-only feedback mode, the first terminal, as the sending terminal, needs to retransmit the groupcast data multiple times. As an example, if the HARQ of the groupcast data is enabled, if the condition that the upper layer can provide the size and the member identifiers of the groupcast group and the size of the groupcast group is less than or equal to (not greater than) the number of PSFCH resources associated with the sidelink grant is not met, then the first terminal may only select the NACK-only feedback mode, and the first terminal needs to retransmit the groupcast data multiple times.

A retransmission number threshold of the groupcast data may be determined based on the implementation of the terminal or configuration of the network device. Optionally, in some embodiments of the present disclosure, the first terminal may determine the retransmission number threshold of the groupcast data based on the implementation of the terminal; and/or the first terminal may determine the retransmission number threshold of the groupcast data based on configuration information sent by the network device, in which the configuration information includes the retransmission number threshold.

In an implementation, the first terminal may determine the retransmission number threshold of the groupcast data based on the implementation of the terminal. When the first terminal retransmits the groupcast data, if the first terminal determines that the current retransmission number of the groupcast data does not reach the retransmission number threshold, the first terminal may continue to retransmit the groupcast data.

In another implementation, the first terminal may receive the configuration information sent by the network device, the configuration information including the retransmission number threshold. The first terminal may determine the retransmission number threshold of the groupcast data according to the configuration information sent by the network device.

Optionally, the first terminal in an RRC connected state may obtain the configuration information including the retransmission number threshold through dedicated RRC signaling, the first terminal in an RRC IDLE (RRC idle state)/RRC INACTIVE (RRC inactive state) state may obtain the configuration information including the retransmission number threshold through SIB, and the first terminal out of coverage (OOC) may obtain the configuration information including the retransmission number threshold through pre-configuration.

Optionally, in some embodiments of the present disclosure, the first terminal determines that the number of retransmissions of the groupcast data does not reach the retransmission number threshold, the first terminal may feedback NACK information to the network device on a PUCCH resource configured by the network device. That is, for HARQ enabled groupcast data, if the first terminal may only select the NACK-only feedback mode, and determine that the number of retransmissions of the groupcast data does not reach the retransmission number threshold, the first terminal feeds back NACK on the PUCCH.

In an implementation, if the network device configures the PUCCH, and a TAT associated with a TAG where a serving cell carrying the HARQ feedback (such as the serving cell where the PUCCH resource for transmitting the HARQ feedback is located) is located has not timed out, the first terminal needs to send the HARQ feedback to the network device on the PUCCH.

In a possible implementation, the number of retransmissions of the groupcast data by the first terminal operating in a first resource allocation mode (the aforementioned resource allocation mode 1) does not reach the retransmission number threshold, the network device configures the PUCCH, and the TAT associated with the TAG where the serving cell carrying the HARQ feedback (such as the serving cell where the PUCCH resource for transmitting the HARQ feedback is located) is located has not timed out, if the first terminal may only select the NACK-only feedback mode, even if no NACK feedback is detected on a PSFCH resource associated with the groupcast data, the first terminal also feeds back NACK information on the PUCCH. The network device receives the NACK information fed back by the first terminal, and may determine it is required to schedule retransmission of the groupcast data based on the NACK information.

In a possible implementation, the number of retransmissions of the groupcast data by the first terminal operating in the first resource allocation mode (the aforementioned resource allocation mode 1) reaches the retransmission number threshold, the network device configures the PUCCH, and the TAT associated with the TAG where the serving cell carrying the HARQ feedback (such as the serving cell where the PUCCH resource for transmitting the HARQ feedback is located) is located has not timed out, the first terminal feeds back ACK information on the PUCCH. The network device receives the ACK information fed back by the first terminal and may determine, based on the ACK information, that there is no need to schedule retransmission of the groupcast data.

Optionally, in some embodiments of the present disclosure, the HARQ of the groupcast data is enabled, if the first terminal may only select the NACK-only feedback mode, the first terminal sends the groupcast data on all reserved resources.

In an implementation, in a case where the first terminal operates in the second resource allocation mode (the aforementioned resource allocation mode 2), the groupcast data is sent on all reserved resources. As an example, the first terminal operating in the resource allocation mode 2 (also called mode2) determines the number of resources reserved for the groupcast data/maximum number of transmissions, and sends the groupcast data on all reserved resources. Even if no NACK feedback is detected on any PSFCH resource associated with the new transmission/retransmission of the groupcast data, the first terminal does not consider the feedback as ACK, does not clear the HARQ buffer, does not skip the next retransmission resource, and continues to retransmit the groupcast data until all the reserved resources are used up.

In an embodiment of the present disclosure, the first terminal determines whether the groupcast data needs to be retransmitted based on the HARQ feedback information of the sidelink groupcast data, thereby ensuring the integrity of the groupcast data in the Sidelink-U scenario. In addition, if the first terminal selects the NACK-only feedback mode, even if the NACK feedback fails to be sent due to an LBT failure, the first terminal, as the sending terminal, cannot detect the HARQ feedback, and the first terminal will not consider the feedback as ACK to continue to send new data packets, but retransmits the groupcast data, thereby solving the problem of packet loss occurring in the terminals within the group due to the first terminal failing to detect the HARQ feedback and mistakenly considering the feedback as ACK to continue to send new data packets.

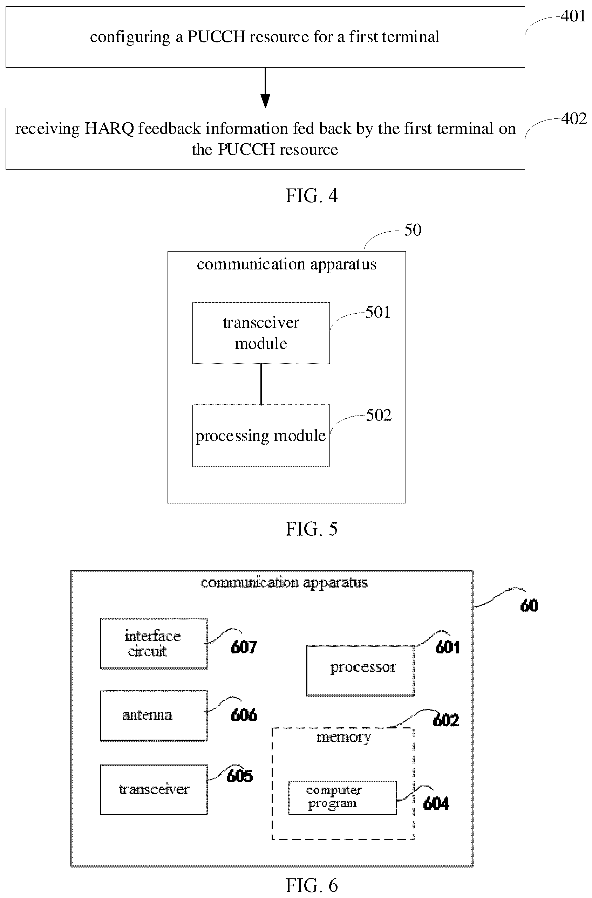

It can be understood that the above embodiments describe the implementation of the groupcast communication method of the embodiments of the present disclosure from the first terminal side. The embodiments of the present disclosure also provide another groupcast communication method, and the implementation of the groupcast communication method will be described from the network device side. With reference to FIG. 4, FIG. 4 is a flowchart of a groupcast communication method according to an embodiment of the present disclosure. It should be noted that the method may be applied in a Sidelink-U scenario, and performed by a network device. As shown in FIG. 4, the method may include but is not limited to the following steps.

At step 401, a PUCCH resource is configured for a first terminal.

In an embodiment of the present disclosure, the PUCCH resource is used to transmit HARQ feedback information fed back by the first terminal to the network device. The HARQ feedback information may be NACK information or ACK information.

In an embodiment of the present disclosure, the first terminal is a terminal that sends groupcast data to at least one second terminal in the Sidelink-U scenario, and the first terminal and the at least one second terminal are located in the same groupcast group.

That is, the network device may configure the PUCCH resource for the first terminal. In an implementation, if the network device configures the PUCCH, and a TAT associated with a TAG where a serving cell carrying the HARQ feedback (such as the serving cell where the PUCCH resource for transmitting the HARQ feedback is located) is located has not timed out, then the first terminal needs to send the HARQ feedback information to the network device on the PUCCH resource.

In another implementation, the number of retransmissions of the groupcast data by the first terminal operating in a first resource allocation mode (the aforementioned resource allocation mode 1) does not reach a retransmission number threshold, the network device configures the PUCCH, and the TAT associated with the TAG where the serving cell carrying the HARQ feedback (such as the serving cell where the PUCCH resource for transmitting the HARQ feedback is located) is located has not timed out, if the first terminal may only select a NACK-only feedback mode, even if no NACK feedback is detected on a PSFCH resource associated with the groupcast data, the first terminal also feeds back NACK information on the PUCCH. In an implementation, the number of retransmissions of the groupcast data by the first terminal operating in the first resource allocation mode (the aforementioned resource allocation mode 1) reaches the retransmission number threshold, the network device configures the PUCCH, and the TAT associated with the TAG where the serving cell carrying the HARQ feedback (such as the serving cell where the PUCCH resource for transmitting the HARQ feedback is located) is located has not timed out, the first terminal feeds back ACK information on the PUCCH.

It should be noted that the above-mentioned retransmission number threshold may be determined based on an implementation of the terminal, or configured by the network device. In an implementation, the network device may send configuration information to the first terminal, and the configuration information includes the retransmission number threshold of the groupcast data. Optionally, the network device can may the configuration information to the first terminal through dedicated RRC signaling, or may also send the configuration information to the first terminal through SIB. That is, the first terminal in an RRC connected state may obtain the configuration information including the retransmission number threshold through the dedicated RRC signaling, the first terminal in an RRCIDLE/RRCINACTIVE state may obtain the configuration information including the retransmission number threshold through the SIB, and the first terminal in an OOC state may obtain the configuration information including the retransmission number threshold through pre-configuration.

At step 402, HARQ feedback information fed back by the first terminal on the PUCCH resource is received.

That is, the network device may configure the PUCCH resource for the first terminal, and receive the HARQ feedback information of the first terminal through the PUCCH resource.

The HARQ feedback information may be NACK information, or may be ACK information. In an implementation, the network device may receive the ACK information fed back by the first terminal on the PUCCH resource, in which the ACK information is HARQ feedback to the network device sent by the first terminal in a case of determining that the HARQ feedback information of the groupcast data is the ACK information. The way in which the first terminal determines that the HARQ feedback information of the groupcast data is the ACK information may be implemented by any of the embodiments of the present disclosure, which is not limited to this herein and will not be described in detail.

In another implementation, the network device may receive NACK information fed back by the first terminal on the PUCCH resource, in which the NACK information is HARQ feedback sent to the network device by the first terminal in a case where a NACK-only feedback mode is selected, the groupcast data is retransmitted multiple times, and the number of retransmissions of the groupcast data does not reach the retransmission number threshold. The way of the first terminal selecting the NACK-only feedback mode may be implemented by any of the embodiments of the present disclosure, which is not limited here and will not be described in detail.

Optionally, in an embodiment of the present disclosure, the network device receives the HARQ feedback information fed back by the first terminal on the PUCCH resource and determines, based on the HARQ feedback information, whether it is required to schedule retransmission of the groupcast data.

In an implementation, in a case where the NACK information fed back by the first terminal is received on the PUCCH resource, the network device schedules retransmission of the groupcast data.

In an implementation, in a case where the ACK information fed back by the first terminal is received on the PUCCH resource, the network device does not need to schedule retransmission of the groupcast data.

In embodiments of the present disclosure, the network device configures the PUCCH resource for the first terminal, and receives the HARQ feedback information fed back by the first terminal on the PUCCH resource, so that the network device determines whether to schedule retransmission of the groupcast data according to the HARQ feedback information, thereby realizing groupcast communication in a Sidelink-U scenario, ensuring the integrity of groupcast data in a Sidelink-U scenario, and solving the problem of packet loss occurring in terminals within the group.

In the embodiments provided by the present disclosure, the methods provided by the embodiments of the present disclosure are introduced from the perspectives of the network device, and the first terminal. In order to implement the functions in the methods provided by the embodiments of the present disclosure, each of the first terminal and the network device may include a hardware structure and a software module, and the functions are implemented in the form of the hardware structure, the software module, or the hardware structure plus the software module. A function of the functions may be executed in the form of the hardware structure, the software module, or the hardware structure plus the software module.

FIG. 5 is a block diagram of a communication apparatus 50 provided in an embodiment of the present disclosure. The communication apparatus 50 shown in FIG. 5 may include a transceiver module 501 and a processing module 502. The transceiver module 501 may include a sending module and/or a receiving module, in which the sending module is used to implement a sending function, the receiving module is used to implement a receiving function, and the transceiver module 501 may implement the sending function and/or the receiving function.

The communication apparatus 50 may be a terminal (such as the first terminal in the above method embodiments), an apparatus in the terminal, or an apparatus capable of being used in combination with the terminal. Or, the communication apparatus 50 may be a network device (such as the network device in the above method embodiments), an apparatus in the network device, or an apparatus capable of being used in combination with the network device.

The communication apparatus 50 is a terminal (such as the first terminal in the above method embodiments). The processing module 502 is configured to: determine a hybrid automatic repeat request (HARQ) feedback mode selected by the first terminal; and determine whether to retransmit groupcast data according to the HARQ feedback mode selected by the first terminal.

In an implementation, the processing module 502 is further configured to: determine whether to retransmit the groupcast data according to HARQ feedback information of the groupcast data, in a case where the HARQ feedback mode selected by the first terminal is an acknowledgement/negative acknowledgement (ACK/NACK) feedback mode.

In a possible implementation, the processing module 502 is further configured to: determine that the HARQ feedback information of the groupcast data is NACK information; and determine to retransmit the groupcast data.

In a possible implementation, the processing module 502 is further configured to: determine that the HARQ feedback information of the groupcast data is the NACK information, in a case where no HARQ feedback information is detected on any of one or more physical sidelink feedback channel (PSFCH) resources associated with the groupcast data; or determine that the HARQ feedback information of the groupcast data is the NACK information, in a case where the NACK information is detected on any of one or more PSFCH resources associated with the groupcast data.

In a possible implementation, the processing module 502 is further configured to: determine that the groupcast data does not need to be retransmitted, in a case where the HARQ feedback information of the groupcast data is ACK information.

In a possible implementation, the processing module 502 is further configured to: retransmit, by the first terminal, the groupcast data multiple times, in a case where the HARQ feedback mode selected by the first terminal is a NACK-only feedback mode.

In a possible implementation, the processing module 502 is further configured to: determine a retransmission number threshold for the groupcast data based on an implementation of the first terminal; and/or determine a retransmission number threshold for the groupcast data according to configuration information sent by a network device, in which the configuration information comprises the retransmission number threshold.

In a possible implementation, the processing module 502 is further configured to: determine that a number of retransmissions of the groupcast data does not reach the retransmission number threshold; and the transceiver module 501 is further configured to: feed back NACK information to the network device on a physical uplink control channel (PUCCH) resource configured by the network device.

In a possible implementation, the transceiver module 501 is further configured to: send the groupcast data on all reserved resources, in a case where the first terminal operates in a second resource allocation mode.

In a possible implementation, the processing module 502 is further configured to: select the HARQ feedback mode according to a first condition; in which the first condition comprises at least one of: an upper layer providing a size and member identifiers of the groupcast group; or a size of the groupcast group being less than or equal to a number of PSFCH resources associated with a sidelink grant, in which the sidelink grant is associated with the groupcast data.

In a possible implementation, the processing module 502 is further configured to: select, by the first terminal, an ACK/NACK feedback mode or a NACK-only feedback mode based on an implementation, in a case where the first condition is met; or select, by the first terminal, an ACK/NACK feedback mode only, in a case where the first condition is met; or select, by the first terminal, a NACK-only feedback mode, in a case where the first condition is not met.

The communication apparatus 50 is the network device. The processing module 502 is configured to: configure a physical uplink control channel (PUCCH) resource for a first terminal, in which the PUCCH resource is used to transmit hybrid automatic repeat request (HARQ) feedback information fed back by the first terminal to the network device, and the first terminal is a terminal for sending groupcast data; and the transceiver module 501 is configured to: receive the HARQ feedback information fed back by the first terminal on the PUCCH resource.

In an implementation, the transceiver module 501 is further configured to: send configuration information to the first terminal, in which the configuration information comprises a retransmission number threshold.

In an implementation, the transceiver module 501 is further configured to: receive acknowledgement (ACK) information fed back by the first terminal on the PUCCH resource, in which the ACK information is an HARQ feedback sent to the network device by the first terminal in a case of determining that the HARQ feedback information of the groupcast data is the ACK information.

In an implementation, the transceiver module 501 is further configured to: receive negative acknowledgement (NACK) information fed back by the first terminal on the PUCCH resource, in which the NACK information is an HARQ feedback sent to the network device by the first terminal in a case of selecting a NACK-only feedback mode, retransmitting the groupcast data multiple times and determining that a number of retransmissions of the groupcast data does not reach the retransmission number threshold.

In a possible implementation, the processing module 502 is further configured to: schedule retransmission of the groupcast data, in a case of receiving the NACK information fed back by the first terminal on the PUCCH resource.

Regarding the apparatus in the above embodiments, the specific manner in which each module performs operations has been described in detail in the embodiments of the method, and will not be elaborated here.

FIG. 6 is a block diagram of a communication apparatus 60 according to an embodiment of the present disclosure. The communication apparatus 60 may be a network device, or may be a terminal (such as the first terminal in the above method embodiments), or may be a chip, a chip system, a processor, etc. that supports the network device to implement the method, or may be a chip, a chip system, a processor, etc. that supports the terminal to implement the method. The apparatus may be used to implement the method in the above method embodiments. For details, please refer to the above method embodiments.

The communication apparatus 60 may include one or more processors 601. The processor 601 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 60 may also include one or more memories 602 for storing the computer program 604. The processor 601 executes the computer program 604, to cause the communication apparatus 60 to implement the method in the above method embodiments. Optionally, the memory 602 may also store data. The communication apparatus 60 and the memory 602 may be set up separately or integrated together.

Optionally, the communication apparatus 60 may also include a transceiver 605 and an antenna 606. The transceiver 605 may be called a transceiver unit, a transceiver machine, or a transceiver circuit, etc., to implement the receiving and sending function. The transceiver 605 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 60 may also include one or more interface circuits 607. The interface circuit 607 is used to receive code instructions and transmit the code instructions to the processor 601. The processor 601 runs the code instructions to cause the communication apparatus 60 to implement the method in the above method embodiments.

The communication apparatus 60 is a terminal (such as the first terminal in the aforementioned method embodiments): the processor 601 is configured to execute steps 201 and 202 in FIG. 2, or execute steps 302, 303, 304 and 305 in FIG. 3. The transceiver 605 is configured to execute step 301 in FIG. 3.

The communication apparatus 60 is the network device: the transceiver 605 is configured to execute step 402 in FIG. 4. The processor 601 is configured to execute step 401 in FIG. 4.

In an implementation, the processor 601 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In an implementation, the processor 601 may store a computer program. When the computer program is running on the processor 601, the communication apparatus 60 is caused to implement the method in the above method embodiments. The computer program may be solidified in the processor 601, in which case the processor 601 may be implemented in hardware.

In an implementation, the communication apparatus 60 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a terminal (such as the first terminal in the aforementioned method embodiments), but the scope of the communication apparatus in the disclosure is not limited to this, and the structure of the communication apparatus may not be restricted by FIG. 6. The communication apparatus may be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

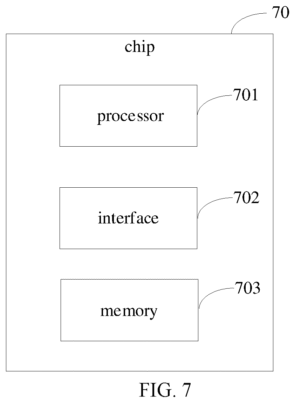

For the case where the communication apparatus may be a chip or a chip system, please refer to the structural diagram of a chip in FIG. 7. The chip shown in FIG. 9 includes a processor 701 and an interface 702. There may be one or more processors 701, and there may be one or more interfaces 702.

For the situation that the chip is used to perform the functions of the terminal (such as the first terminal in the above method embodiments) in the embodiments of the present disclosure:

the processor 701 is configured to: determine a hybrid automatic repeat request (HARQ) feedback mode selected by the first terminal; and determine whether to retransmit groupcast data according to the HARQ feedback mode selected by the first terminal.

In an implementation, the processor 701 is further configured to: determine whether to retransmit the groupcast data according to HARQ feedback information of the groupcast data, in a case where the HARQ feedback mode selected by the first terminal is an acknowledgement/negative acknowledgement (ACK/NACK) feedback mode.

In a possible implementation, the processor 701 is further configured to: determine that the HARQ feedback information of the groupcast data is NACK information; and determine to retransmit the groupcast data.

In a possible implementation, the processor 701 is further configured to: determine that the HARQ feedback information of the groupcast data is the NACK information, in a case where no HARQ feedback information is detected on any of one or more physical sidelink feedback channel (PSFCH) resources associated with the groupcast data; or determine that the HARQ feedback information of the groupcast data is the NACK information, in a case where the NACK information is detected on any of one or more PSFCH resources associated with the groupcast data.

In a possible implementation, the processor 701 is further configured to: determine that the groupcast data does not need to be retransmitted, in a case where the HARQ feedback information of the groupcast data is ACK information.

In a possible implementation, the processor 701 is further configured to: retransmit, by the first terminal, the groupcast data multiple times, in a case where the HARQ feedback mode selected by the first terminal is a NACK-only feedback mode.

In a possible implementation, the processor 701 is further configured to: determine a retransmission number threshold for the groupcast data based on an implementation of the first terminal; and/or determine a retransmission number threshold for the groupcast data according to configuration information sent by a network device, in which the configuration information comprises the retransmission number threshold.

In a possible implementation, the processor 701 is further configured to: determine that a number of retransmissions of the groupcast data does not reach the retransmission number threshold; the interface 702 is further configured to: feed back NACK information to the network device on a physical uplink control channel (PUCCH) resource configured by the network device.

In a possible implementation, the interface 702 is further configured to: send the groupcast data on all reserved resources, in a case where the first terminal operates in a second resource allocation mode.

In a possible implementation, the processor 701 is further configured to: select the HARQ feedback mode according to a first condition; in which the first condition comprises at least one of: an upper layer providing a size and member identifiers of the groupcast group; or a size of the groupcast group being less than or equal to a number of PSFCH resources associated with a sidelink grant, in which the sidelink grant is associated with the groupcast data.

In a possible implementation, the processor 701 is further configured to: select, by the first terminal, an ACK/NACK feedback mode or a NACK-only feedback mode based on an implementation, in a case where the first condition is met; or select, by the first terminal, an ACK/NACK feedback mode only, in a case where the first condition is met; or select, by the first terminal, a NACK-only feedback mode, in a case where the first condition is not met.

For the situation that the chip is used to perform the functions of the network device in the embodiments of the present disclosure:
the processor 701 is configured to configure a physical uplink control channel (PUCCH) resource for a first terminal, in which the PUCCH resource is used to transmit hybrid automatic repeat request (HARQ) feedback information fed back by the first terminal to the network device, and the first terminal is a terminal for sending groupcast data; the interface 702 is further configured to receive the HARQ feedback information fed back by the first terminal on the PUCCH resource.

In an implementation, the interface 702 is further configured to: send configuration information to the first terminal, in which the configuration information comprises a retransmission number threshold.

In an implementation, the interface 702 is further configured to: receive acknowledgement (ACK) information fed back by the first terminal on the PUCCH resource, in which the ACK information is an HARQ feedback sent to the network device by the first terminal in a case of determining that the HARQ feedback information of the groupcast data is the ACK information.

In an implementation, the interface 702 is further configured to: receive negative acknowledgement (NACK) information fed back by the first terminal on the PUCCH resource, in which the NACK information is an HARQ feedback sent to the network device by the first terminal in a case of selecting a NACK-only feedback mode, retransmitting the groupcast data multiple times and determining that a number of retransmissions of the groupcast data does not reach the retransmission number threshold.

In a possible implementation, the processor 701 is further configured to: schedule retransmission of the groupcast data, in a case of receiving the NACK information fed back by the first terminal on the PUCCH resource.

Optionally, the chip also includes a memory 703, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a communication system is provided. The communication system includes the communication apparatus as a terminal (such as the first terminal in the above method embodiments) and the communication apparatus as a network device in the foregoing embodiment of FIG. 5, or the communication system includes the communication apparatus as a terminal (such as the first terminal in the above method embodiments) and the communication apparatus as a network device in the foregoing embodiment of FIG. 6.

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiments of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, prestored, pre-negotiated, pre-configured, solidified or pre-fired.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, for a specific working process of a system, an apparatus and a unit described above reference may be made to a corresponding process in the above method embodiments, and details will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A groupcast communication method, applied in a sidelink unlicensed spectrum (Sidelink-U) scenario and performed by a first terminal, comprising:
determining a hybrid automatic repeat request (HARQ) feedback mode selected by the first terminal; and
determining whether to retransmit groupcast data according to the HARQ feedback mode selected by the first terminal.

2. The method of claim 1, wherein determining whether to retransmit the groupcast data according to the HARQ feedback mode selected by the first terminal comprises:
determining whether to retransmit the groupcast data according to HARQ feedback information of the groupcast data, in a case where the HARQ feedback mode selected by the first terminal is an acknowledgement/negative acknowledgement (ACK/NACK) feedback mode.

3. The method of claim 2, wherein determining whether to retransmit the groupcast data according to the HARQ feedback information of the groupcast data comprises:
determining that the HARQ feedback information of the groupcast data is NACK information; and
determining to retransmit the groupcast data.

4. The method of claim 3, wherein determining that the HARQ feedback information of the groupcast data is the NACK information comprises:
determining that the HARQ feedback information of the groupcast data is the NACK information, in a case where no HARQ feedback information is detected on any of one or more physical sidelink feedback channel (PSFCH) resources associated with the groupcast data; or
determining that the HARQ feedback information of the groupcast data is the NACK information, in a case where the NACK information is detected on any of one or more PSFCH resources associated with the groupcast data.

5. The method of any of claims 2-4, wherein determining whether to retransmit the groupcast data according to the HARQ feedback information of the groupcast data comprises:
determining that the groupcast data does not need to be retransmitted, in a case where the HARQ feedback information of the groupcast data is ACK information.

6. The method of claim 1, wherein determining whether to retransmit the groupcast data according to the HARQ feedback mode selected by the first terminal comprises:
retransmitting, by the first terminal, the groupcast data multiple times, in a case where the HARQ feedback mode selected by the first terminal is a NACK-only feedback mode.

7. The method of claim 6, further comprising:
determining a retransmission number threshold for the groupcast data based on an implementation of the first terminal; and/or
receiving configuration information sent by a network device, and determining a retransmission number threshold for the groupcast data according to the configuration information, wherein the configuration information comprises the retransmission number threshold.

8. The method of claim 7, further comprising:
determining that a number of retransmissions of the groupcast data does not reach the retransmission number threshold; and
feeding back NACK information to the network device on a physical uplink control channel (PUCCH) resource configured by the network device.

9. The method of claim 6, further comprising:
sending the groupcast data on all reserved resources, in a case where the first terminal operates in a second resource allocation mode.

10. The method of any of claims 1-9, further comprising:
selecting the HARQ feedback mode according to a first condition;
wherein the first condition comprises at least one of:
an upper layer providing a size and member identifiers of a groupcast group; or
a size of a groupcast group being less than or equal to a number of PSFCH resources associated with a sidelink grant, wherein the sidelink grant is associated with the groupcast data.

11. The method of claim 10, wherein selecting the HARQ feedback mode according to the first condition comprises:
selecting, by the first terminal, an ACK/NACK feedback mode or a NACK-only feedback mode based on an implementation, in a case where the first condition is met; or
selecting, by the first terminal, an ACK/NACK feedback mode only, in a case where the first condition is met; or
selecting, by the first terminal, a NACK-only feedback mode, in a case where the first condition is not met.

12. A groupcast communication method, applied in a sidelink unlicensed spectrum (Sidelink-U) scenario and performed by a network device, comprising:
configuring a physical uplink control channel (PUCCH) resource for a first terminal, wherein the PUCCH resource is used to transmit hybrid automatic repeat request (HARQ) feedback information fed back by the first terminal to the network device, and the first terminal is a terminal for sending groupcast data; and
receiving the HARQ feedback information fed back by the first terminal on the PUCCH resource.

13. The method of claim 12, further comprising:
sending configuration information to the first terminal, wherein the configuration information comprises a retransmission number threshold.

14. The method of claim 12, wherein receiving the HARQ feedback information fed back by the first terminal on the PUCCH resource comprises:
receiving acknowledgement (ACK) information fed back by the first terminal on the PUCCH resource, wherein the ACK information is an HARQ feedback sent to the network device by the first terminal in a case where the first terminal determines that the HARQ feedback information of the groupcast data is the ACK information.

15. The method of claim 13, wherein receiving the HARQ feedback information fed back by the first terminal on the PUCCH resource comprises:
receiving negative acknowledgement (NACK) information fed back by the first terminal on the PUCCH resource, wherein the NACK information is an HARQ feedback sent to the network device by the first terminal in a case where the first terminal selects a NACK-only feedback mode, the groupcast data is retransmitted multiple times and a number of retransmissions of the groupcast data does not reach the retransmission number threshold.

16. The method of claim 15, further comprising:
scheduling, by the network device, retransmission of the groupcast data, in a case of receiving the NACK information fed back by the first terminal on the PUCCH resource.

17. A communication apparatus, applied in a sidelink unlicensed spectrum (Sidelink-U) scenario and configured in a first terminal, comprising a processing module, configured to:
determine a hybrid automatic repeat request (HARQ) feedback mode selected by the first terminal; and
determine whether to retransmit groupcast data according to the HARQ feedback mode selected by the first terminal.

18. A communication apparatus, applied in a sidelink unlicensed spectrum (Sidelink-U) scenario and configured in a network device, comprising:
a processing module, configured to configure a physical uplink control channel (PUCCH) resource for a first terminal, wherein the PUCCH resource is used to transmit hybrid automatic repeat request (HARQ) feedback information fed back by the first terminal to the network device, and the first terminal is a terminal for sending groupcast data; and
a transceiver module, configured to receive the HARQ feedback information fed back by the first terminal on the PUCCH resource.

19. A communication apparatus, comprising a processor and a memory, wherein a computer program is stored in the memory, and the processor executes the computer program stored in the memory to cause the apparatus to perform the method of any one of claims 1 to 11.

20. A communication apparatus, comprising a processor and a memory, wherein a computer program is stored in the memory, and the processor executes the computer program stored in the memory to cause the apparatus to perform the method of any one of claims 12 to 16.

21. A computer-readable storage medium for storing instructions, wherein when the instructions are executed, the method of any one of claims 1 to 11 is implemented.

22. A computer-readable storage medium for storing instructions, wherein when the instructions are executed, the method of any one of claims 12 to 16 is implemented.
